# EUROPEAN PATENT SPECIFICATION

(11) **EP 0 932 510 B1**
(45) Date of publication and mention of the grant of the patent: **19.12.2001**
(21) Application number: 97910674.7
(22) Date of filing: 22.10.1997
(51) Int. Cl.: B60G 3/20

(54) **WHEEL SUSPENSION FOR VEHICLES**
RADAUFHÄNGUNG FÜR FAHRZEUGE
SUSPENSION DE ROUES POUR VEHICULES

(30) Priority: 23.10.1996 SE 9603877
(43) Date of publication of application: 04.08.1999
(73) Proprietor: Scania CV Aktiebolag (publ), 151 87 Södertälje (SE)
(72) Inventor: BERGSTRÖM, Lars, S-633 69 Eskilstuna (SE)
(74) Representative: Waldebäck, Hans Olov
(86) International application number: SE9701760
(87) International publication number: WO9817486

(56) References cited:
- WO-A-94/29133
- DE-B- 1 116 981
- FR-A- 1 051 204
- GB-A- 2 277 304

## Description

### State of the art

The present invention relates to a wheel suspension for a vehicle in accordance with the preamble to patent claim 1.

### Background to the invention

A generally known practice in vehicles is to arrange an individual wheel suspension for the steerable front wheels with transverse upper and lower link arms. These link arms form part of a mechanism whose purpose is to keep the angle of the wheels substantially constant relative to a longitudinal vertical plane during spring deflection. To this end it is desirable to make the link arms as long as possible. In vehicles with a separate frame, as is usual in heavy-duty vehicles, the upper link arms are usually fastened to brackets on the longitudinal side members of the frame (frame beams). In such cases, however, the width between the frame side members limits the length of the upper link arms which is possible in practice.

With a view to making it possible to use relatively long upper link arms, a prior practice known from patent specification DE 11 16 981 is to provide the side members with an upward bend in the region of the link arm fastenings and instead to fasten the link arms to brackets under the side members. This solution has the disadvantage that the side members cannot maintain their simple shape but have instead to be bent. In addition, the bent-up sections encroach into the space required for other components.

Patent specification WO 94/29133 refers to another wheel suspension whereby the straight shape of the side members can be maintained and the lower link arms are fastened to brackets on the lower flanges of the side members. However, such a fastening to a flange is less advantageous from the force absorption point of view, since this is a portion of a beam which is relatively weak.

### Objects of the invention

The object of the present invention is to provide a wheel suspension which endows the vehicle with favourable running characteristics and at the same time particularly favourable steering characteristics. A further object is to provide a wheel suspension which makes it possible for the upper link arms to be made relatively long without exhibiting the aforesaid disadvantages of previous known solutions. The simple straight shape of the side members can thus be maintained and at the same time the fastenings can be applied to the side members at points which are favourable from the force absorption point of view.

### Summary of the invention

According to the invention, the abovementioned objects are achieved by the wheel suspension indicated in the preamble to patent claim 1 being provided with the features which are indicated in the characterising part of patent claim 1.

Providing the side members with holes according to the invention makes it possible for the fastenings which support the link arms to be arranged on the inner sides of the side members and for the link arms to be made correspondingly longer.

This has the further advantage that the height position of the upper link arms can be maintained relative to solutions whereby their fastening is to the outer side of the side beams. In cases where the side members take the form of channel beams with web directed inwards, the invention makes it possible for the supports of the link arms to be situated in a space which usually cannot be used effectively despite there generally being a shortage of space in the region between the side members. This design makes it possible for the wheel suspension to be designed with favourable geometry for the wheel suspension, which means that the vehicle can be endowed with good steering characteristics.

The dependent patent claims indicate various advantageous embodiments of the invention, and further characteristics and advantages which distinguish the invention are indicated in the embodiment described below with reference to the attached drawings.

### Brief description of the drawings

Fig. 1 shows a front view of a wheel suspension according to the invention,
Fig. 2 shows an upper link arm forming part of the wheel suspension in a view from above, and
Fig. 3 shows the wheel suspension in a perspective view.

### Description of the invention

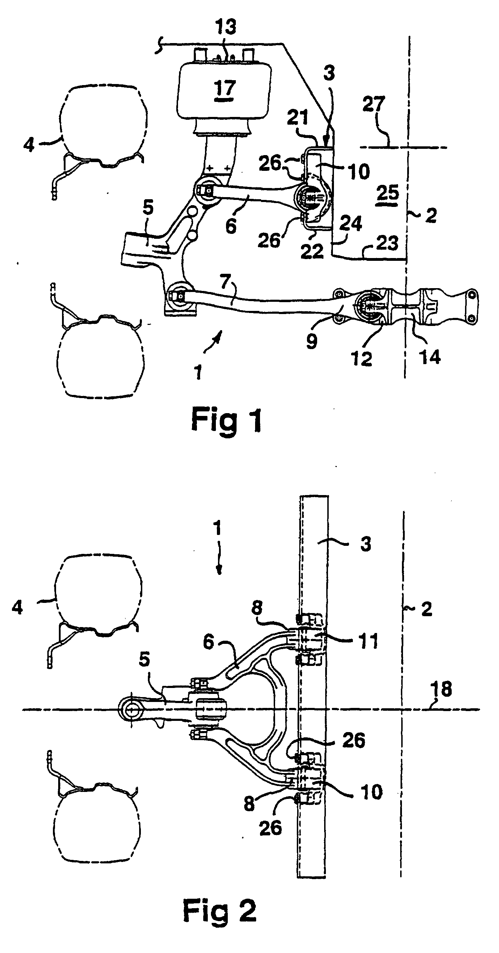

The invention relates to a wheel suspension 1 for a vehicle with a conventional frame with longitudinal side members 3 (frame beams) such as are usual, for example, in a heavy-duty truck and/or a bus. The embodiment described here concerns a wheel suspension for a bus. The wheel suspension 1 is of the individual type, which means that the wheels on either side of the vehicle centreline 2 move individually and independently of one another. The two front wheels have symmetrically similar wheel suspension, so Fig. 1 and Fig. 2 show only the wheel suspension for one wheel 4.

Fig. 1 shows the wheel suspension as seen from the front. With a view to making clear the parts which are more essential to the invention, other parts of the wheel suspension 1 have been simplified or not depicted at all. All the drawings are in this respect merely schematic. In the region of the wheel suspensions 1, the vehicle is provided with longitudinal side members 3 which may extend along the whole length of the vehicle or along only part of its length. The wheel suspension 1 for the wheel 4 includes a vertical link 5 with a conventional mounting for the wheel 4. As the wheel 4 is steerable, the vertical length 5 includes a substantially vertical pivot about which a steering spindle is arranged for rotation so that the associated wheel 4 can rotate during steering. These parts of the wheel suspension are of conventional design but are of minor significance for this invention, so they are not described in further detail and not depicted in the drawings.

The upper and lower sections of the vertical link 5 are fastened respectively to an upper link arm 6 and a lower link arm 7, both of which extend in the transverse direction of the vehicle. The two link arms 6,7 are also substantially parallel to one another, as well as also being substantially parallel to a horizontal plane in the normal undeflected spring position depicted in the drawings. Both of these link arms 6,7 are supportingly fastened to the vehicle frame at their respective inner ends.

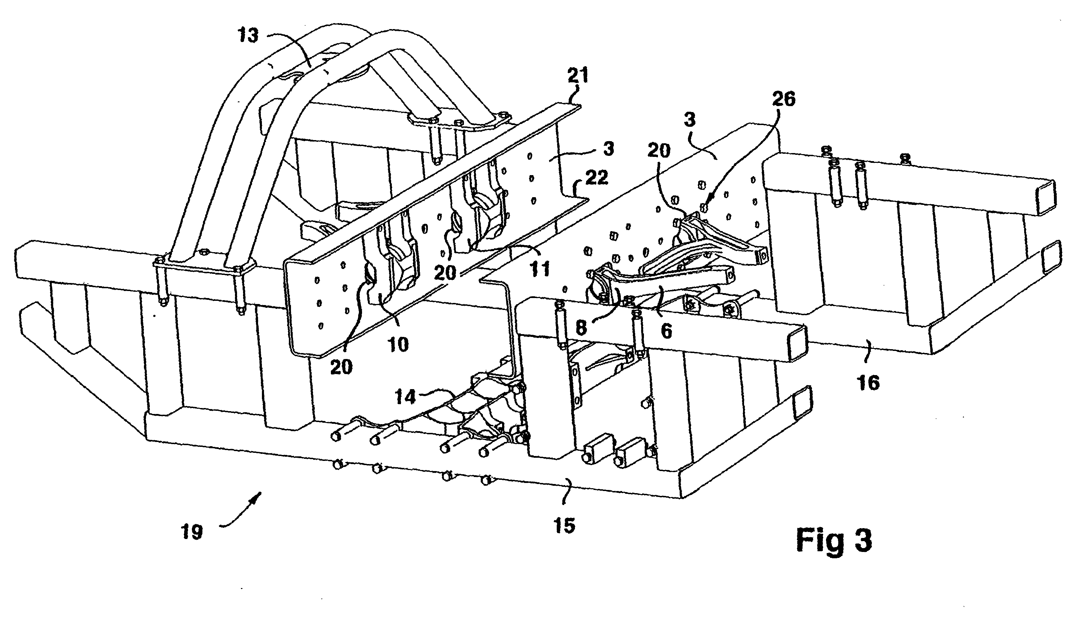

Fig. 2 shows the upper link arm 6 and how its inner end 8 is fastened to the side member 3 by means of respective forward and rear brackets 10 and 11. The upper link arm 6 thus takes the form of a triangular link. The lower link arm 7 also takes the form of a triangular link and has its inner ends 9 fastened correspondingly to forward and rear brackets 12 on a longitudinal central beam 14. This central beam 14 extends between two of the cross-members 15,16 of the frame, as depicted in Fig. 3. These brackets 10-12 by means of which the upper and lower swing arms 6,7 are fastened to the vehicle frame include mountings with axes extending in the longitudinal direction of the vehicle. The swing arms 6,7 will thus move substantially vertically during spring deflection. The two link arms 6,7 have their respective outer ends supportingly fastened in a conventional manner to the vertical link 5.

An air bellows 17 is arranged at the upper end of the vertical link 5 and at the outer end of the upper link arm 6 and forms part of a spring arrangement of conventional design per se which is arranged between the wheel suspension 1 and the bus frame. Fig. 3 shows a wheel housing frame, forming part of the vehicle frame, with a support plate 13 of the type on which the air bellows is intended to bear.

Fig. 3 shows an otherwise simplified perspective view of a bus front wheel module 19 which incorporates wheel suspensions I according to the invention. The forward and rear brackets 10,11 for the respective upper link arms 6 are arranged on each of the two side members 3 and incorporate the mountings by means of which the upper swing arms 6 are fastened to the respective side members 3. The brackets 10,11 are arranged on the inner sides of the side members 3. The upper link arms 6 thus extend through purpose-made holes 20 in the respective side members 3 in the regions of the respective brackets 10,11.

The side members 3 take the form of channel beams with flanges 21,22 directed inwards, and the brackets 10,11 are accommodated substantially within the region between the flanges 21,22. The two holes 20 in the respective side members 3 for the inner ends 8 of the respective upper link arms are arranged at the same height position. As may be seen in Fig. 2, the brackets 10,11 are arranged symmetrically relative to a vertical symmetry plane 18 which is situated in substantially the same longitudinal position as the rotation axis of the wheel 4. This symmetry makes it possible for the swing arms 6 to be designed symmetrically so that similar swing arms 6 can be used for the wheel suspensions on both the right and the left sides. Identical design of all the brackets 10,11 results in a high degree of standardisation which makes the wheel suspension favourable from the manufacturing and cost points of view.

Arranging the brackets 10,11 on the inner side of the side members 3 makes it possible for the upper link arms 6 to be made correspondingly longer, resulting in a more favourable movement of the wheel 4 during spring deflection. In alternative embodiments the upper link arms 6 may be made still longer so that they extend still further in towards the vehicle centreline 2. In applications in a bus, however, there is also a conflicting wish to be able to provide as wide as possible a central gangway. Fig. 1 shows a floor 23 and sidewalls 24 forming part of the bus body in the region of the wheel 4, and the diagram indicates that the central gangway 25 extends approximately all the way up to the flanges 21,22 of the side members. This indicates that the bus depicted is of the low-floor type, which means that the bus floor 23 is situated in a horizontal plane which is lower than a horizontal plane 27 through the upper flanges 21 of the side members. In other types of buses the whole floor may be situated above the side members 3, in which case the conflict does not arise and the upper link arms 6 can be allowed to extend further in towards the bus centreline 2.

In the embodiment described, the brackets 10,11 are fastened to the inner sides of the side members 3 by means of bolted connections 26 which are fitted from outside and are tightened from the outer side of the side members 3. This means that the holes 20 provided in the side members 3 for the two inner ends 8 of the respective swing arms can be made relatively small, since they only need to be large enough to allow the inner ends 8 of the swing arms 6 to pass through the respective holes 20. In alternative embodiments the brackets 10,11 may be fitted from the outer sides of the side beams, with only the section which contains the mounting being arranged on the inner sides of the side members 3.

Within the scope of the patent claims below, the invention may be modified and designed otherwise than as indicated in the embodiment described above. For example, the invention may be used on wheels which are not steerable and also on other types of vehicle. The embodiment described includes upper and lower swing arms but the invention may also be used in wheel suspensions with only one swing arm or with a different number of swing arms. The invention is primarily intended for a wheel suspension of the individual type but may also be used analogously in cases where the wheel suspension is of another type.

## Claims

1. Wheel suspension for a vehicle provided with a frame with longitudinal side members (3) where the wheel suspension for a wheel (4) incorporates at least one transverse link arm (6) which not only has an inner end (8) fastened to a bracket (10,11) to which is fastened a mounting for said inner end (8) and which is itself fastened to one side member (3), but also has an outer end fastened to a vertical link (5), **characterised in that** the side member (3) in the region of the bracket (10,11) is provided with a hole (20), that the inner end (8) of the swing arm (6) extends through the hole (20) and that the mounting of the bracket is arranged on the inner side of the side member (3).

2. Wheel suspension according to patent claim 1, **characterised in that** the link arm is an upper link arm (6) for the wheel suspension.

3. Wheel suspension according to patent claim 1, **characterised in that** the bracket (10,11) is fitted to the inner side of the side member (3).

4. Wheel suspension according to patent claim 3, **characterised in that** the bracket (10,11) is fitted to the inner side of the side member (3) by means of bolted connections (26) from the outer side of the side member (3).

5. Wheel suspension according to patent claim 1, **characterised in that** the hole (20) in the side member (3) is arranged in the web of the side member.

6. Wheel suspension according to patent claim 5 whereby the side member (3) takes the form of a channel beam with flanges (21,22) directed inwards, **characterised in that** the bracket (10,11) is fitted in a space within the flanges (21,22) of the side member.

7. Wheel suspension according to any one of patent claims 1-6, **characterised in that** the link arm (6) takes the form of a triangular link with two inner ends (8), each of which is arranged to extend through the respective hole (20) provided for it in the side member (3).

## Patentansprüche

1. Radaufhängung für ein Fahrzeug, das einen Rahmen mit längsverlaufenden Seitenteilen (3) aufweist, wobei die Radaufhängung für ein Rad (4) mindestens einen querliegenden Verbindungsarm (6) umfasst, der nicht nur ein inneres Ende (8) hat, das an einer Konsole (10, 11) befestigt ist, an der eine Halterung für dieses innere Ende (8) befestigt ist, und welche ihrerseits an einem Seitenteil (3) befestigt ist, und der auch ein äußeres Ende hat, das an einem senkrechten Glied (5) befestigt ist,
**dadurch gekennzeichnet, dass** das Seitenteil (3) im Bereich der Konsole (10, 11) mit einem Loch (20) versehen ist, dass das innere Ende (8) des Schwenkarms (6) sich durch das Loch (20) erstreckt, und dass die Halterung der Konsole an der Innenseite des Seitenteils (3) angeordnet ist.

2. Radaufhängung nach Anspruch 1,
**dadurch gekennzeichnet, dass** der Verbindungsarm ein oberer Verbindungsarm (6) für die Radaufhängung ist.

3. Radaufhängung nach Anspruch 1,
**dadurch gekennzeichnet, dass** die Konsole (10, 11) an der Innenseite des Seitenteils (3) angebracht ist.

4. Radaufhängung nach Anspruch 3,
**dadurch gekennzeichnet, dass** die Konsole (10, 11) an der Innenseite des Seitenteils (3) mittels Schraubverbindungen (26) von der Außenseite des Seitenteils (3) her angebracht ist.

5. Radaufhängung nach Anspruch 1,
**dadurch gekennzeichnet, dass** das Loch (20) im Seitenteil (3) im Steg des Seitenteils angeordnet ist.

6. Radaufhängung nach Anspruch 5, wobei das Seitenteil (3) die Form eines C-Trägers mit nach innen gerichteten Flanschen (21, 22) aufweist,
**dadurch gekennzeichnet, dass** die Konsole (10, 11) in einem Raum innerhalb der Flansche (21, 22) des Seitenteils angebracht ist.

7. Radaufhängung nach einem der Ansprüche 1 bis 6,
**dadurch gekennzeichnet, dass** der Verbindungsarm (6) die Form eines Dreieckslenkers mit zwei inneren Enden (8) aufweist, von denen jedes sich durch das ihm jeweils zugeordnete Loch (20) im Seitenteil (3) erstreckt.

## Revendications

1. Suspension de roue pour un véhicule pourvu d'un châssis comprenant des longerons (3), la suspension de roue pour une roue (4) comportant au moins un bras de liaison transversal (6) qui non seulement a une extrémité intérieure (8) fixée à une patte (10, 11) à laquelle est fixé un élément de montage pour cette extrémité intérieure (8) et qui est fixée elle-même à un longeron (3), mais qui a aussi une extrémité extérieure fixée à une liaison verticale (5),
**caractérisé en ce que** le longeron (3) est pourvu, dans la région de la patte (10, 11), d'une ouverture (20), **en ce que** l'extrémité intérieure (8) du bras oscillant (6) s'étend à travers l'ouverture (20) et **en ce que** l'élément de montage de la patte est agencé sur la face intérieure du longeron (3).

2. Suspension de roue selon la revendication 1, **caractérisé en ce que** le bras de liaison est un bras supérieur (6) pour la suspension de roue.

3. Suspension de roue selon la revendication 1, **caractérisé en ce que** la patte (10, 11) est assemblée sur la face Intérieure du longeron (3).

4. Suspension de roue selon la revendication 3, **caractérisé en ce que** la patte (10, 11) est assemblée sur la face intérieure du longeron (3) moyennant des liaisons rivetées (26) à partir de la face extérieure du longeron.

5. Suspension de roue selon la revendication 1, **caractérisé en ce que** l'ouverture (20) dans le longeron (3) est aménagée dans l'âme du longeron.

6. Suspension de roue selon la revendication 5, le longeron ayant la forme d'un profilé en U dont les alles (21, 22) sont orientées vers l'intérieur, **caractérisé en ce que** la patte (10, 11) est assemblée dans un espace entre les ailes (21, 22) du longeron.

7. Suspension de roue selon l'une quelconque des revendications 1 à 6, **caractérisé en ce que** le bras de liaison (6) a la forme d'une liaison triangulaire pourvue de deux extrémités Intérieures (8), dont chacune est agencée de façon à s'étendre à travers l'ouverture correspondante (20) pratiquée pour elle dans le longeron (3).
